# EUROPÄISCHE PATENTANMELDUNG

(11) **EP 1 086 799 A1**
(43) Veröffentlichungstag der Anmeldung: **28.03.2001**
(21) Anmeldenummer: 00109277.4
(22) Anmeldetag: 28.04.2000
(51) Int. Cl.: B29C 45/72, B29C 35/16

(54) **Verfahren und Vorrichtung zum Nachkühlen eines Vorformlings im Spritzgussverfahren**

(30) Priorität: 10.09.1999 US 394456
(71) Anmelder: Fasti Farrag & Stipsits GmbH, 6361 Hopfgarten i.Br. (AT)
(72) Erfinder: Farrag, Rainer, South Elgin, Illinois 60177 (US)
(74) Vertreter: Riebling, Peter, Dr.-Ing.

(57) **Zusammenfassung**

Die vorliegende Erfindung beschäftigt sich mit der Verbesserung des Nachkühlvorganges von Vorformlingen aus dem Spritzgußverfahren hinsichtlich seiner Effizienz und seiner Wirtschaftlichkeit. Dies wird dadurch erreicht, daß auch ein Innenraum des Vorformlings mittels eines Kühlmediums gekühlt wird.

## Beschreibung

Gegenstand der vorliegenden Erfindung ist ein Verfahren und eine Vorrichtung zum Nachkühlen eines Vorformlings, der im Spritzgußverfahren hergestellt wurde.

Derartige Vorformlinge werden im Spritzgußverfahren mit dem Ziel hergestellt, daraus in einem späteren Verfahrensschritt in einem nachfolgenden Hohlblasverfahren einen Hohlkörper zu blasen, wie z.B. eine Kunststoff-Flasche, einen Kunststoffbehälter oder dergleichen mehr. Um also einen derartigen Vorformling im Spritzgußverfahren herzustellen, ist in ansich bekannter Weise eine Spritzgießmaschine erforderlich, die im wesentlichen aus zwei zueinander beweglichen Formenhälften besteht, wobei die eine Formenhälfte die in Verbindung mit einem Extruder steht, entsprechend heißflüssiges Kunststoffmaterial in die Formenhälfte einspritzt, wonach dann die Formenhälfte gekühlt wird und der Vorformling nun in der Spritzgießmaschine im zugeordneten Formenkern vorhanden ist.

Um einen derartigen, noch sehr heißen Vorformling entsprechend zu kühlen, ist es bekannt, den Vorformling aus der Spritzgießmaschine zu entfernen und in eine sogenannte Nachkühlplatte einzubringen. Beim Nachkühlen in der Nachkühlplatte ist es bekannt, den Vorformling in entsprechenden, gekühlten Kavitäten der Nachkühlplatte aufzunehmen und diesen mindestens an seinem Außenumfang zu kühlen. Als Kühlmittel wird hier insbesondere ein flüssiges Kühlmedium, wie z.B. Wasser, Öl oder dergleichen, verwendet. Es kann aber auch gekühlte Luft verwendet werden.

Bei diesem Nachkühlen des Vorformlings in der Nachkühlplatte besteht jedoch der Nachteil, daß der Vorformling nur ungenügend gekühlt wird, weil eben die Kühlleistung in diesem Nachkühlverfahren begrenzt ist. Wie ausgeführt, erfolgt die Kühlung nur am Außenumfang des Vorformlings, was dazu führt, daß ein Temperatur-Gradient in Richtung auf den Innenraum des Vorformlings entsteht, der zu einer Verschlechterung des Kunststoffmaterials führt. Das Kunststoffmaterial neigt nämlich bei einer derartigen Nachkühlung zu der Umwandlung des Kristallgefüges in Form von kristallinen Gebilden, was die Qualität des Vorformlings stark beeinträchtigt. Im nachfolgenden Hohlblasverfahren kann der Vorformling deshalb nur noch schwierig und unter Qualitätsverlusten weiterverarbeitet werden.

Der Erfindung liegt deshalb die Aufgabe zugrunde, ein Verfahren und eine Vorrichtung zur Verbesserung der Kühlleistung in einer Nachkühlplatte so weiterzubilden, daß eine wesentlich bessere Qualität des Materials des Vorformlings mit besserer Kühlleistung erreicht wird, und daß das Kühlmittel rückgewonnen wird.

Zur Lösung der gestellten Aufgabe ist das Verfahren dadurch gekennzeichnet, daß während des Nachkühlens auch der Innenraum des Vorformlings mittels eines Kühlmediums gekühlt wird.

Mit diesem wesentlichen Verfahrensschritt besteht der Vorteil, daß nun nicht mehr die Kühlung des Vorformlings allein von seinem Außenumfang her nach innen gerichtet erfolgt, sondern daß der Vorformling nun auch noch in seinem Innenraum gekühlt wird. Voraussetzung hierbei ist, daß der Vorformling mindestens an einer Seite offen ist und von außen her von der Nachkühlplatte her zugänglich ist, damit von dieser Öffnung her das Kühlmedium in den Innenraum des Vorformlings eingeführt werden kann.

Hierbei werden von der Erfindung sämtliche bekannte Arten eines Kühlmediums beansprucht. In einer bevorzugten Ausführungsform wird das Verfahren dadurch ausgeführt, daß als Kühlmedium gekühlte, getrocknete Luft eingeblasen wird.

Als Temperatur für diese Kühlluft kann hierbei Raumtemperatur bzw. Kühltemperatur von bis zu -35° C verwendet werden, wobei Feuchtigkeitsgehalte von 0% relativer Feuchte bis maximal 98% relative Feuchte verwendet werden können.

Wenn insbesondere eine gekühlte, getrocknete Preßluft verwendet wird, dann werden Temperaturen im Bereich von + 5° C bis maximal - 35°C bevorzugt, wobei bei diesen Lufttemperaturen eine nahe dem Taupunkt befindliche Luft kurz vor Erreichen des Taupunktes verwendet wird.

Selbstverständlich ist die Verwendung eines Kühlmediums aus Luft nicht einschränkend für die vorliegende Erfindung zu verstehen. Es können auch andere Kühlmedien verwendet werden, wie z.B. eine Luft, die mit Wasser in Sprayform angereichert ist oder nur ein flüssiges Kühlmedium, wie z.B. gekühltes Wasser, Wasser bei Raumtemperatur, oder andere flüssige Kühlmedien, wie z.B. Alkohol oder alkoholische Lösungen.

Das Verfahren bezieht sich allgemein darauf, daß der Innenraum des Vorformlings mit dem bevorzugt gasförmigen Kühlmedium gekühlt wird. Hierzu ist es erforderlich, daß das Kühlmedium in den Innenraum des Vorformlings eingeblasen oder eingespritzt wird. Für diese Ausführungsform gibt es eine Reihe von verschiedenen Möglichkeiten, die alle als erfindungswesentlich beansprucht werden.

In einer ersten Ausführungsform der vorliegenden Erfindung ist es vorgesehen, daß das bevorzugt gasförmige Kühlmedium durch eine Zuführung in Form eines Mundstückes an den Vorformling herangeführt wird und das gasförmige Kühlmedium in den Vorformling unter Überdruck eingepresst wird.

Der Einfachheit halber wird in der nachfolgenden Erfindungsbeschreibung nur von einem gasförmigen Kühlmedium ausgegangen, obwohl die vorliegende Erfindung auch alle anderen Typen von Kühlmedien beansprucht.

Wenn also ein derartiges gasförmiges Kühlmedium in den Vorformling eingeblasen wird, dann ist es in einer ersten Ausführungsform demgemäß vorgesehen, daß ein entsprechendes Blasmundstück an die Öffnung des Vorformlings herangeführt wird und der Vorformling mit diesem Kühlmedium ausgeblasen wird.

In einer zweiten Ausführungsform einer entsprechenden Vorrichtung ist es bevorzugt, wenn das Blasmundstück nicht nur bis an die Öffnung des Vorformlings heranreicht, sondern wenn das Blasmundstück in den Vorformling hineintaucht, so daß dieses Blasmundstück als Tauchrohr ausgebildet ist, welches möglichst tief in den Vorformling eintaucht und diesen an der Innenseite von seiner Bodenfläche her ansteigend mit Kühlluft versieht, welche dann entlang der Innenfläche des Vorformlings nach oben strömt und den Vorformling wieder verlässt.

Damit wird eine wesentlich bessere und intensivere Beströmung des Vorformlings erreicht, weil einerseits das kühle Tauchrohr in den Vorformling eintaucht und den Vorformling allein schon durch entsprechende Kältestrahlung kühlt und andererseits auch noch das Kühlmedium selbst den Vorformling von seiner inneren Bodenfläche ansteigend nach oben kühlt.

Zu den vorher genannten Kühlmedien wird noch angefügt, daß neben dem vorher erwähnten gasförmigen Kühlmedium auch entsprechende verflüssigte und tiefgekühlte Gase verwendet werden können, wie z.B. flüssige Luft, flüssiger Stickstoff oder andere verflüssigte tiefgekühlte Luftgemische.

In einer bevorzugten Ausführungsform der Ausbildung des Tauchrohres ist es vorgesehen, daß das Tauchrohr lediglich eine untere, stirnseitige Öffnung aufweist, die im wesentlichen auf den inneren Bodenbereich des zu kühlenden Vorformlings gerichtet ist, so daß damit eine entsprechende Strömungsumkehr im Bereich dieses Mundstückes stattfindet und die Luft dann im Zwischenraum zwischen dem Außenumfang des Tauchrohres und dem Innenraum des Vorformlings nach oben steigt.

In einer anderen Ausgestaltung ist es vorgesehen, daß das Tauchrohr noch entsprechende Querbohrungen aufweist, so daß also nicht nur ein nach unten gerichtetes, stirnseitig offenes Ausströmrohr vorhanden ist, sondern daß auch noch über entsprechende Querbohrungen der Luftaustritt im Bereich gegenüberliegend der Innenwandung des Vorformlings erfolgt.

Das Tauchrohr kann aus einem Kunststoffmaterial oder aus einem Metallmaterial gemacht werden und sein lichter Durchmesser muß nicht unbedingt dem lichten Innendurchmesser des Vorformlings angepasst sein; d.h. der lichte Durchmesser des Tauchrohres kann auch wesentlich kleiner sein als der Durchmesser des entsprechenden Vorformlings.

Die Auströmöffnung im Bereich des Tauchrohres kann auch mit entsprechenden Düsen versehen sein, um entsprechende Turbulenzen in diesem Bereich zu erzeugen oder eine gezielte Anströmung von bestimmten Bereichen des Vorformlings, die aus bestimmten Gründen besonders und hervorgehoben gekühlt werden müssen.

Es können also gerichtete Düsen in Verbindung mit dem Tauchrohr verwendet werden, um bevorzugt bestimmte Bereiche des Vorformlings im Innenraum zu kühlen.

Der Einfachheit halber wird in der vorliegenden Erfindung lediglich von einem Tauchrohr und einem einzigen Vorformling gesprochen. Es ist dem Fachmann aber klar und bekannt, daß in Wirklichkeit eine derartige Spritzgießmaschine mit einer dazugehörenden Nachkühlplatte aus einer Vielzahl von hintereinander liegenden Kavitäten besteht und daß in jeder Kavität ein entsprechender Vorformling sitzt, der mittels der Nachkühlplatte gekühlt wird.

Eine derartige Nachkühlplatte enthält also 10, 20 oder auch 200 derartige Formenkavitäten, in denen jeweils ein Vorformling angeordnet ist, wobei jedem Vorformling ein entsprechendes Tauchrohr der zugehörenden Kühlblasstation zugeordnet ist.

Dementsprechend ist auch die erfindungsgemässe Kühlblasstation entsprechend vervielfacht, d.h. die Kühlblasstation besteht aus einer Verteilerplatte, in der eine gemeinsame Verteilerkammer angeodnet ist und in dieser Verteilerkammer sind die Tauchrohre parallel und hintereinanderliegend angeordnet, durch welche die zugeordnete Kühlluft in die entsprechend zu kühlenden Vorformlinge eingeleitet wird.

Bei dem beschriebenen Ausführungsbeispiel besteht allerdings der Nachteil, daß mit dem Einpressen von einem gasförmigen Kühlmedium in eine Öffnung eines Vorformlings evtl. unerwünschte Luftschwingungen entstehen, die mit einer entsprechenden Geräuschbelastung verbunden sind.

Weiterer Nachteil des erstgenannten Ausführungsbeispiels ist, daß die Kühlluft praktisch ungenutzt aus dem Vorformling entweicht, weil sie nicht mehr eingefangen werden kann und nicht mehr für weitere Kühlzwecke herangezogen werden kann.

Um diese Nachteile zu vermeiden, sieht die Erfindung in einer weiteren Ausführungsform vor, daß die Kühlblasstation nicht aus einem einfachen Tauchrohr besteht, welches in den Vorformling eingelassen wird, sondern daß am Ausgang des Vorformlings nun dichtend eine Abluftsammelkammer auf die Nachkühlplatte aufgesetzt wird, und daß die aus dem Vorformling entweichende und nur mit relativ geringer Wärmeaufnahme aufgeladene Abluft der Kühlluft in der Abluftsammelkammer gesammelt wird und dann erst über einen Auslaß entnommen wird.

Die Anordnung einer Abluftsammelkammer hat also den Vorteil, daß die aus dem Vorformling entweichende Kühl-Abluft in der Abluftsammelkammer gesammelt werden kann und dann über einen oder mehrere Auslässe gezielt weiter verwendet werden kann.

Es werden zunächst einmal durch die Verwendung einer derartigen Abluftsammelkammer, die abdichtend auf der Nachkühlplatte aufgesetzt wird, unerwünschte Luftschwingungen vermieden, weil in der Abluftsammelkammer ein Überdruck entsteht, der der Entstehung von Luftschwingungen entgegenwirkt. Außerdem können an den Auslaßkanälen der Abluftsammelkammer noch entsprechende Schalldämpfer angebracht werden, was vorher bei der einfachen, erstbeschriebenen Ausführungsform ja nicht möglich war, weil dort die Kühlluft ungenutzt ins Freie strömte.

Bei der zweiten Ausführungsform besteht also der Vorteil, daß nun in den Abluftkanälen Auslaßschalldämpfer angeordnet werden können.

Weiterer Vorteil ist, daß nun auch am Eingang der Kühlluft zugeordnete Einlaßventile angeordnet werden können, so daß also die Kühlluft gesteuert nur dann in den Vorformling eingeblasen wird, wenn der Einlaßkanal geöffnet wird und dies erfolgt nur dann, wenn die gesamte Kühlblasstation abdichtend auf den Vorformling aufgesetzt ist und das Nachkühlen beginnt.

Es kann also genau definiert die Kühlluft zu einem bestimmten Zeitpunkt gestartet und auch wieder abgestellt werden, was bei der erstbeschriebenen Ausführungsform nicht ohne weiteres möglich war. Daher litt die erstgenannte Ausführungsform auch unter dem Nachteil, daß ein höherer Kühlluftverbrauch in Kauf genommen werden musste.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert ein Schnitt durch eine erste Ausführungsform einer Kühlblasstation,
- Figur 2:: Schnitt durch eine zweite Ausführungsform einer Kühlblasstation,
- Figur 3:: schematisiert die Kühlblasstationen nach den Figuren 1 oder 2 in einem Verfahrensschritt,
- Figur 4:: ein zweiter Verfahrensschritt,
- Figur 5:: ein dritter Verfahrensschritt,
- Figur 6:: ein vierter Verfahrensschritt,
- Figur 7:: ein fünfter Verfahrensschritt,
- Figur 8:: ein sechster Verfahrensschritt,
- Figur 9:: ein siebter Verfahrensschritt,
- Figur 10:: ein achter Verfahrensschritt,
- Figur 11:: eine gegenüber Figur 5 abgewandelte Ausführungsform mit einer liegenden Kühlblasstation entweder der Figur 1 oder der Figur 2,
- Figur 12:: die liegende Form der Kühlblasstation nach Figur 1 oder Figur 2 in einer anderen Darstellung im Vergleich nach Figur 10.

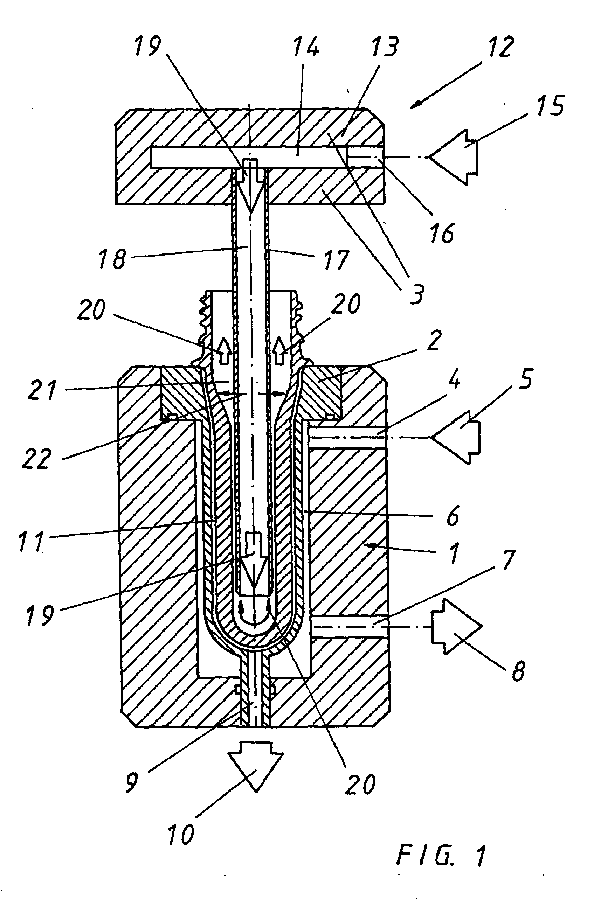

In Figur 1 ist allgemein eine Nachkühlplatte 1 dargestellt, die der Einfachheit halber nur in einfacher Ausführungsform dargestellt ist. Es wurde bereits schon im allgemeinen Beschreibungsteil darauf hingewiesen, daß sich in der Zeichenebene der Figur 1 diese Nachkühlplatte 1 in vielfacher Ausfertigung wiederholt, d.h. es sind mehrere Nachkühlplatten hintereinanderfolgend in der Zeichenebene der Figur 1 dargestellt und vorhanden und in jeder Nachkühlplatte 1 ist ein entsprechender Einsatz 2 für einen zu kühlenden Vorformling 3 angeordnet.

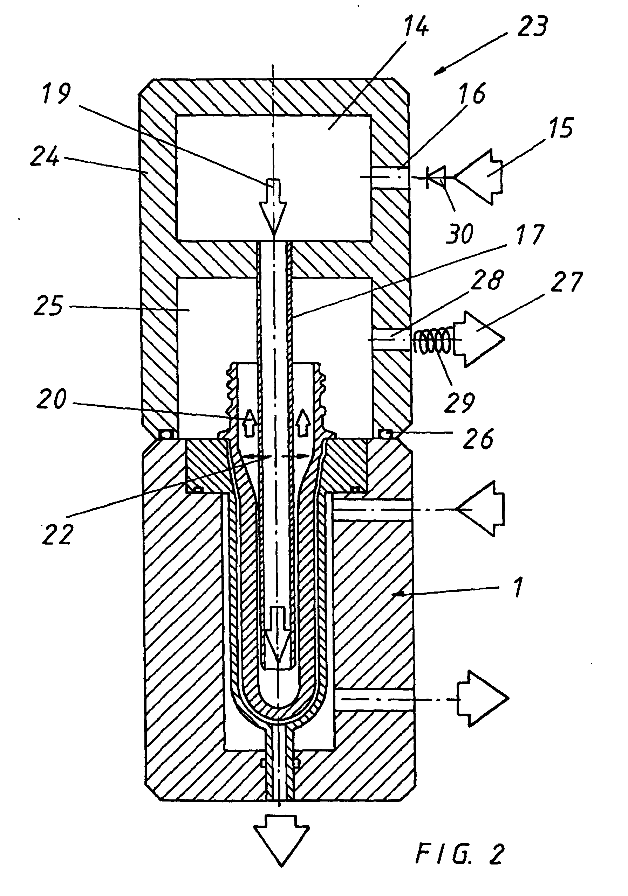

Selbstverständlich können die Nachkühlplatten 1 auch parallel nebeneinander liegend in der Zeichenebene der Figur 1 oder der Figur 2 angeordnet sein, so daß sie also sowohl nebeneinander als auch hintereinander liegend in vielfacher Ausfertigung vorhanden sein können.

Gleiches gilt im übrigen für die erfindungsgemäss dargestellte Kühlblasstation 12 nach Figur 1 bzw. der Kühlblasstation 23 nach Figur 2, die entsprechend der Ausgestaltung der Nachkühlplatte in dementsprechend vielfacher Ausfertigung nebeneinander liegend und hintereinander liegend vorhanden ist.

Der Einfachheit halber wird jedoch nur eine einzige Nachkühlplatte 1 mit einer einzigen Kühlblasstation 12, 23 beschrieben, obwohl die jeweilige Anordnung in vielfacher Form vorhanden ist.

Die Nachkühlplatte 1 weist also einen Einsatz 2 auf, der eine innere Kavität für die Aufnahme eines zu kühlenden Vorformlings 3 ausbildet.

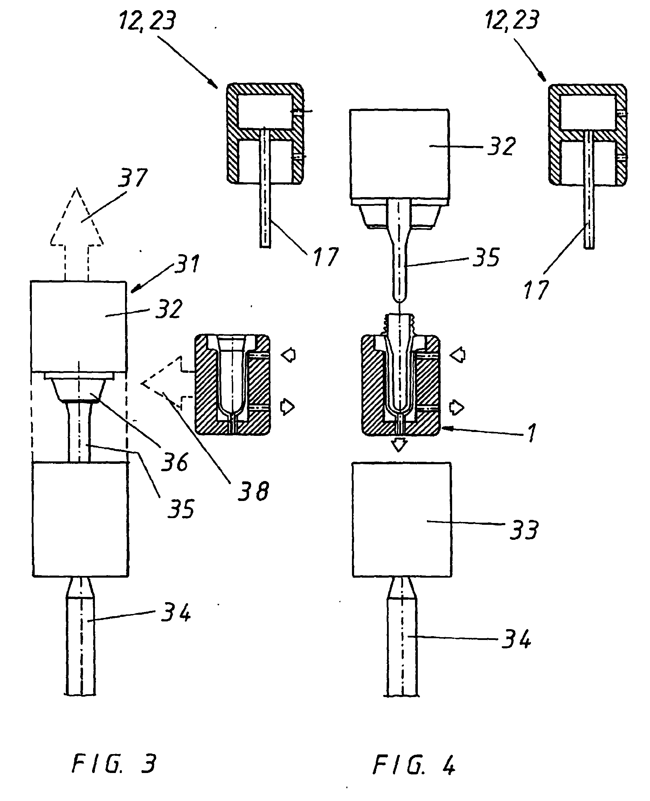

Der Übergang des Vorformlings von der Spritzgießmaschine 31 in die Nachkühlplatte 1 wird später noch anhand der Figur 3 erläutert.

Wenn also der Vorformling aus der Spritzgießmaschine 31 entnommen wurde und in die Nachkühlplatte 1 eingesetzt ist, wird er entsprechend dem Ausführungsbeispiel nach Figur 1 an seinem Außenumfang und auch an seinem Innenumfang gekühlt.

Die Kühlung an seinem Außenumfang erfolgt dadurch, daß über den Einlaßkanal 4 in Pfeilrichtung 5 ein flüssiges oder gasförmiges Kühlmedium eingelassen wird, welches in den Kühlkanal 6 fließt, welcher Kühlkanal den Außenumfang des Einsatzes 2 kühlt. Das Kühlmedium sammelt sich in diesem Kühlkanal 6 und wird über den Auslaßkanal 7 in Pfeilrichtung 8 wieder entnommen.

Der zeichnerischen Deutlichkeit wegen ist dargestellt, daß der Vorformling 3 mit seinem Außenumfang in einem Formenraum 11 des Einsatzes 2 liegt, obwohl dieser Formenraum 11 in Wirklichkeit nicht besteht, weil der Vorformling 3 sich in Körperkontakt mit der Innenwandung des Einsatzes 2 befindet.

Zur Kühlung des Innenraumes sieht die Erfindung eine Kühlblasstation 12 vor, die im wesentlichen aus einer Verteilerplatte 3 besteht, welche eine insich geschlossene Verteilerkammer 14 bildet, die lediglich über einen Einlaßkanal 16 nach außen hin geöffnet ist, über welchen das Kühlmedium in Pfeilrichtung 15 in die Verteilerkammer 14 der Überdruck eingelassen wird.

Das Kühlmedium strömt in Pfeilrichtung 19 in das Tauchrohr 17, welches einen inneren Ausblaskanal 18 bildet, der in den Innenraum des Vorformlings 3 gerichtet ist.

Bevorzugt endet die vordere Stirnseite des Tauchrohres 17 mit dem Ausblaskanal 18 kurz vor der inneren Bodenfläche des Vorformlings 3, damit dort eine Luftumkehr in Pfeilrichtung 20 stattfinden kann und das Kühlmedium dann im Innenraum 21 des Vorformlings nach oben strömt und hierbei gleichzeitig auch von der Außenfläche des Tauchrohres noch zusätzlich gekühlt wird.

Es erfolgt also ein ausgezeichneter Kühleffekt des Kühlmediums.

Dieser Kühleffekt kann noch dadurch verstärkt werden, daß im Tauchrohr eine oder mehrere Querbohrungen 22 vorhanden sind, durch welche das Kühlmedium noch zusätzlich durch den damit erzielten Düseneffekt in den Innenraum 21 austritt.

Zum Ausstoßen des Vorformlings 3 aus dem Einsatz 2 ist unten am Einsatz 2 noch ein Kanal 9 angeformt, durch welchen in Pfeilrichtung 10 angesaugt wird, um zunächst den Vorformling 3 in dem Einsatz 2 festzusaugen und zu halten. Die Strömungsrichtung kann umgekehrt werden, so daß auch in Gegenrichtung (Pfeilrichtung 10') Preßluft aufgegeben werden kann, um den Vorformling 3 aus dem Einsatz 2 heraus zu befördern.

Statt der pneumatischen Ansaugung und Ausstoßung kann auch eine mechanische Ausstoßung mittels eines Kerns erfolgen.

Die Figur 2 zeigt nun eine gegenüber Figur 1 verbesserte Ausführungsform, in der erkennbar ist, daß die Kühlblasstation 23 aus zwei übereinander liegenden Kammern besteht, nämlich der oberen Verteilerkammer 14 und einer unteren Abluftsammelkammer 25, die mittels Dichtungen 26 abdichtend auf der Oberfläche des Einsatzes 2 oder der Nachkühlplatte 1 aufsitzt.

Wird nun ein Kühlmedium in Pfeilrichtung 19 über das Tauchrohr 17 in den Vorformling 3 eingeführt, dann strömt das Kühlmedium wiederum in Pfeilrichtung 20 aus dem Vorformling heraus, wird aber jetzt in der Abluftkammer 25 gehalten.

Es handelt sich also um ein Gehäuse 24 mit den vorher besagten zwei Kammern 14,25, welches Gehäuse 24 nun die neuartige Kühlblasstation 23 ausbildet.

Vorteil dieser Maßnahme ist, daß sich in der Abluftsammelkammer 25 ein gewisser Gegendruck ausbildet, der unerwünschten Schallbildungen im Bereich des Innenraums 21 entgegenwirkt, so daß also die Schallausbreitung durch Einblasen des Kühlmediums in den Vorformling 3 stark reduziert wird. Weiterer Vorteil ist, daß durch Aufsetzen der Abluftsammelkammer 25 auf den Vorformling überhaupt nun eine Schalldämmhaube gebildet wird und außerdem die Abluftsammelkammer 25 die Abluft nun sammelt, die nun gesteuert über den Auslaßkanal 28 entnommen werden kann. Damit kann die nur leicht erwärmte Abluft-Kühlluft weiteren Trocknungs- und Kühlzwecken zugeführt werden.

Es wird hierzu auf ein weiteres Patent, US 5,513,445 des gleichen Anmelders verwiesen, dessen Offenbarung vollinhaltlich von der vorliegenden Offenbarung erfasst werden soll, weil dort beschrieben ist, daß die Abluft-Kühlluft für andere Trocknungszwecke herangezogen werden kann. Es werden z.B. Formenkavitäten mit dieser Abluft getrocknet.

Es können vorteilhaft auch im Auslaßkanal 28 Schalldämpfer 29 angeordnet werden, die eine weitere Schallausbreitung des entstehenden Schalles vermeiden.

Die Luft strömt dann eben in Pfeilrichtung 27 durch den Auslaßkanal 28 und kann hierbei ein oder mehrere Schalldämpfer 29 durchströmen.

Weiterer Vorteil des Ausführungsbeispiels nach Figur 2 ist, daß am Einlaßkanal 16 ein Schaltventil 30 angeordnet sein kann (aber nicht muß), welches gesteuert, geöffnet und geschlossen werden kann. Es wird nur dann geöffnet, wenn die Abdichtung des Gehäuses 24 auf der Nachkühlplatte 1 hergestellt ist, so daß also nicht unerwünscht Kühlluft entweichen kann. Es wird geschlossen, wenn die gesamte Kühlblasstation 23 von der Nachkühlplatte 1 abgehoben wird oder wenn der Kühlvorgang abgeschlossen ist.

Damit kann also der Verbrauch von Kühlluft wesentlich begrenzt werden.

Anhand der Figuren 3 bis 12 wird nun der verfahrensmässige Ablauf der Verwendung einer Kühlblasstation 12, 23 näher erläutert.

Es wird darauf hingewiesen, daß zwar wegen der zeichnerischen Einfachheit nur lediglich die Kühlblasstation 23 zeichnerisch dargestellt ist; diese kann aber durch die Kühlblasstation 12 ersetzt sein. In Figur 3 ist dargestellt, daß eine Spritzgießmaschine 31 im wesentlichen aus zwei zueinander bewegbaren Formenteilen 32,33 besteht, wobei der Formenteil 32 in Pfeilrichtung 37 und in Gegenrichtung hierzu zu dem stationären Formenteil 33 bewegbar ist. Zwischen beiden Formenteilen 32,33 wird hierbei der Formkern 35 aufgenommen, der sich nach oben durch ein Gewindeformteil 36 fortsetzt. In diesem Formenteil 35,36 wird der Vorforming 3 im Spritzgießverfahren gespritzt, in dem über den Extruder 34 entsprechende Kunststoffmasse eingespritzt und zur Aushärtung in den Formenteilen 32,33 gebracht wird.

Sobald nun der Vorformling 3 in der Spritzgießmaschine 31 fertiggestellt wurde, wird die bewegliche Form 32 nach oben in Pfeilrichtung 37 bewegt und es wird die Nachkühlplatte 1 in dem Bereich zwischen den beiden Formenteilen eingebracht. Dies ist in Figur 4 dargestellt. Der Vorformling hängt hierbei noch am Formenkern 35 dran und wird dann in die Kavität der Nachkühlplatte 1 eingesetzt, wie dies in Figur 4 dargestellt ist.

Die Kühlblasstation 12,23 ist hierbei noch im ausgeschalteten und inaktiven Zustand.

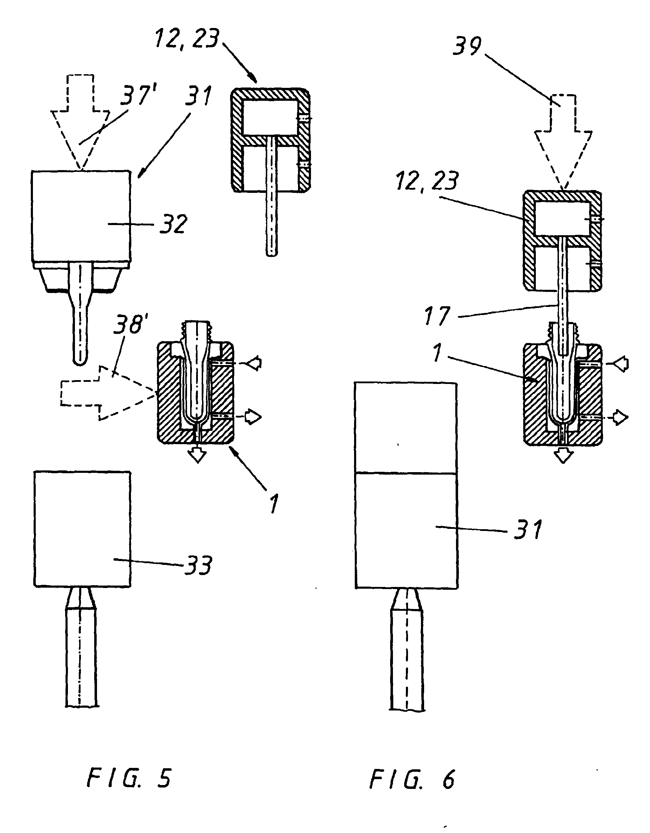

Es wird nun gemäss Figur 5 die Nachkühlplatte 1 aus dem Bereich der Spritzgießmaschine 31 in Pfeilrichtung 38 herausbefördert und gleichzeitig wird in Pfeilrichtung 37 ' wieder die bewegliche Formenplatte 32 nach unten gefahren, so daß gemäss Figur 6 die Spritzgießmaschine 31 für einen weiteren Spritzgußvorgang zur Verfügung steht.

Es wird nun das Nachkühlen des Vorformlings gemäss Figur 6 durchgeführt, indem die Kühlblasstation 12,23 in Pfeilrichtung 39 gegen die Nachkühlplatte 1 bewegt wird, so daß das Tauchrohr 17 in den Vorformling 3 hineintaucht.

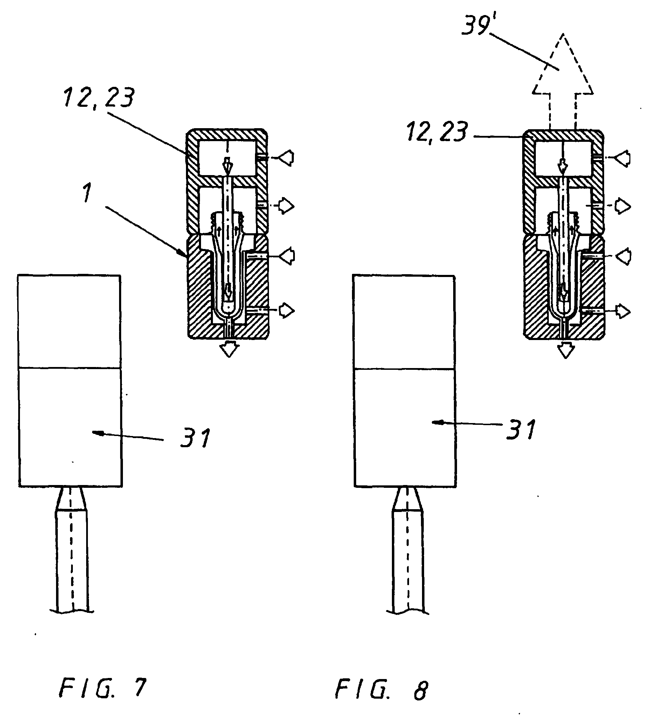

In Figur 7 findet nun das eigentliche Nachkühlen statt, was anhand der Figuren 1 und 2 ausführlich beschrieben wurde. Gleichzeitig wird mit der Spritzgießmaschine 31 ein neuer Vorformling gespritzt.

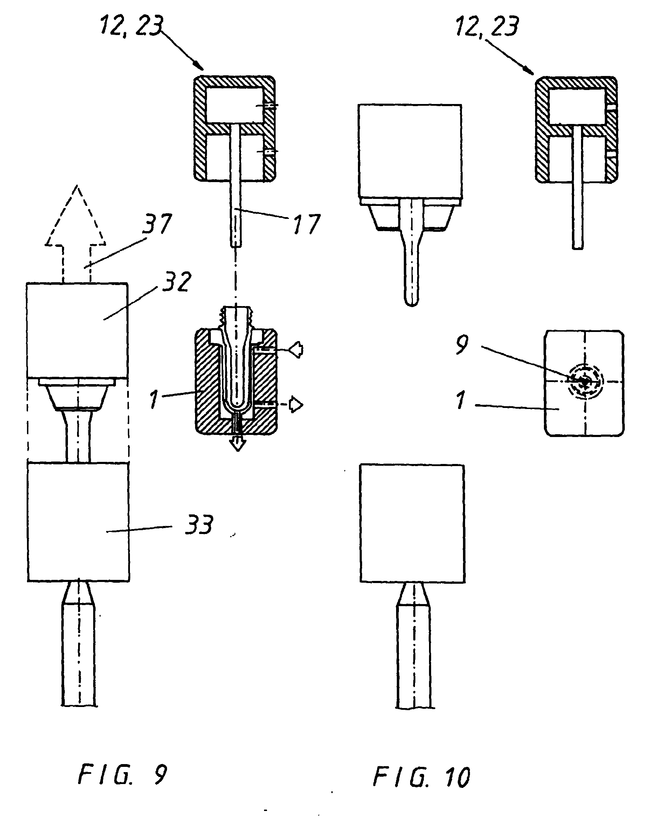

Nach erfolgter Nachkühlung des Vorformlings nach Figur 8 wird die Kühlblasstation 12, 23 in Pfellrichtung 39 nach oben bewegt, so daß das Tauchrohr 17 außer Eingriff mit dem Vorformling kommt, wobei gemäss Figur 9 die Spritzgießmaschine bereit ist, eine neue Charge abzugeben. Es wiederholt sich also der Vorgang, der bereits schon in Figur 3 erläutert wurde.

Die Figur 10 zeigt, daß zum Ausstoßen des Vorformlings 3 aus der Nachkühlplatte 1 die gesamte Nachkühlplatte 1 auch gedreht werden kann. Dies ist in Figur 10 dargestellt, weil dort die Nachkühlplatte 1 im vergleich zu Figur 9 um 90° gedreht wurde, so daß nun die Ansicht auf die Bodenseite und den dortigen Kanal 9 in Figur 10 dargestellt ist.

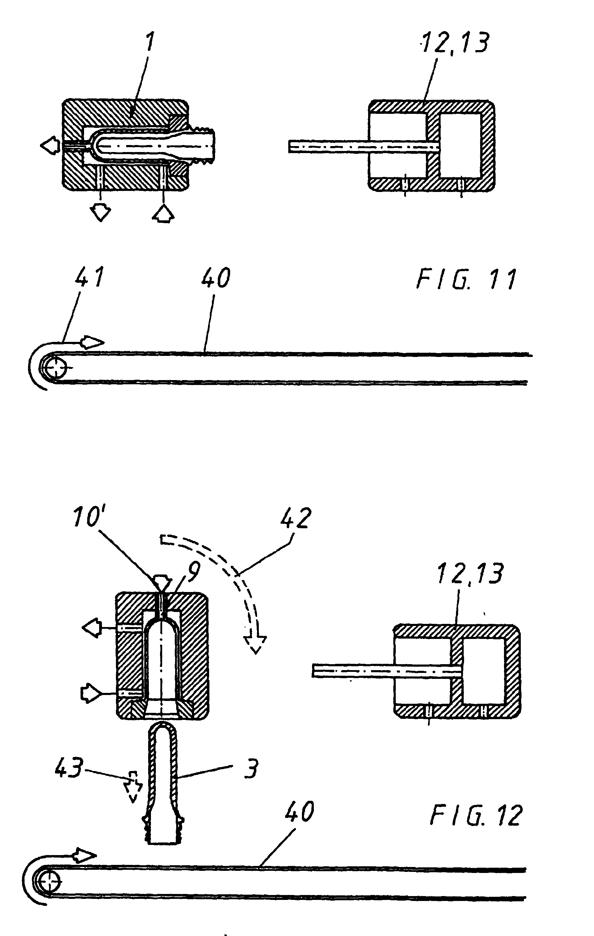

Diese Situation ist in Figur 11 nochmals in gedrehter Darstellung gezeigt, wobei gleichzeitig ersichtlich ist, daß unter der Nachkühlplatte 1 ein Transportband 40 angeordnet ist, welches beispielsweise in Pfeilrichtung 41 angetrieben ist.

Es wird nun die Nachkühlplatte 1 in Pfeilrichtung 42 um 90° nach unten geschwenkt, so daß der Vorformling nun durch einen entsprechenden Ausstoßvorgang oder Auswurfvorgang durch Einbringen von Oberdruck in Pfeilrichtung 10' in den Kanal 9 nach unten ausgestossen wird (Pfeilrichtung 43), dort auf das Transportband 40 fällt und abtransportiert wird.

Selbstverständlich kann hierbel die Kühlblasstation 12, 23 stationär angeordnet werden oder sie kann auch mit der Nachkühlplatte selbst verschwenkbar ausgebildet sein.

Es ist im Rahmen der vorliegenden Erfindung auch vorgesehen, daß die Nachkühlplatte 1 ersetzt wird durch eine Übergabeplatte, welche die Vorformlinge aus der Spritzgießmaschine abholt und wobei dann erst die Obergabeplatte die Vorformlinge in einer Nachkühlplatte übergibt, mit der dann die Kühlblasstationen 12,23 ihre Nachkühlung ausführen.

Ebenso können mehrere Nachkühlplatten und mehrere Kühlblasstationen 12,23 parallel zueinander verwendet werden. In einem ersten Verfahrensschritt kann dann eine erste Nachkühlplatte 1, die Vorformlinge aus der Spritzgießmaschine 31 abholen und mit der entsprechenden Kühlblasstation 12,23 zusammenarbeiten, so daß während dieses Kühlens eine zweite Nachkühlplatte in den Bereich der Spritzgießmaschine 31 fährt und eine weitere Charge von Vorformlingen abholt, die wiederum mit getrennten Kühlblasstationen 12,23 zusammenwirkt.

### Zeichnungs-Legende

- 1: Nachkühlplatte
- 2: Einsatz
- 3: Vorformling
- 4: Einlaßkanal
- 5: Pfeilrichtung
- 6: Kühlkanal
- 7: Auslaßkanal
- 8: Pfeilrichtung
- 9: Kanal
- 10: Pfeilrichtung
- 11: Formenraum
- 12: Kühlblasstation
- 13: Verteilerplatte
- 14: Verteilerkammer
- 15: Pfeilrichtung
- 16: Einlaßkanal
- 17: Tauchrohr
- 18: Ausblaskanal
- 19: Pfeilrichtung
- 20: Pfeilrichtung
- 21: Innenraum
- 22: Querbohrung
- 23: Kühlblasstation
- 24: Gehäuse
- 25: Abluftsammelkammer
- 26: Dichtung
- 27: Pfeilrichtung
- 28: Auslaßkanal
- 29: Schalldämpfer
- 30: Ventil
- 31: Spritzgießmaschine
- 32: beweglicher Formenteil
- 33: stationärer Formenteil
- 34: Extruder
- 35: Formkern
- 36: Gewindeformteil
- 37: Pfeilrichtung
- 38: "
- 39: "
- 40: Transportband
- 41: Pfeilrichtung
- 42: Pfeilrichtung
- 43: "

## Patentansprüche

1. Verfahren zum Nachkühlen von Vorformlingen die im Spritzgussverfahren hergestellt werden um daraus in einem nachfolgenden Hohlblasverfahren einen Hohlkörper zu blasen, wobei der Vorformling in einem Einsatz einer Nachkühlplatte zwecks Nachkühlung angeordnet ist, **dadurch gekennzeichnet, daß** während des Nachkühlens des Vorformlings (3) auch ein Innenraum (21) des Vorformlings (3) mittels eines Kühlmediums gekühlt wird.

2. Verfahren nach Anspruch 1, **dadurch gekennzeichnet,** daß das Kühlmedium in den Innenraum (21) des Vorformlings (3) eingeblasen oder eingespritzt wird.

3. Verfahren nach Anspruch 2, **dadurch gekennzeichnet,** daß der Vorformling (3) an seiner Innenseite von seiner Bodenfläche her ansteigend mit Kühlmittel versorgt wird.

4. Verfahren nach Anspruch 1, **dadurch gekennzeichnet,** daß das Kühlmittel durch eine Zuführung in Form eines Tauchrohres (17) an den Vorformling (3) herangeführt und unter Überdruck in den Vorformling (3) eingebracht wird.

5. Verfahren nach Anspruch 4, **dadurch gekennzeichnet,** daß das Tauchrohr (17) in den Vorformling (3) hineingetaucht wird.

6. Verfahren nach Anspruch 2, **dadurch gekennzeichnet,** daß das Kühlmittel entlang der Innenfläche des Vorformlings (3) nach oben strömt und den Vorformling (3) wieder verläßt.

7. Verfahren nach Anspruch 2, **dadurch gekennzeichnet,** daß das Kühlmittel beim Ausstömen im wesentlichen auf den inneren Bodenbereich des zu kühlenden Vorformlings (3) gerichtet ist.

8. Verfahren nach Anspruch 4, **dadurch gekennzeichnet,** daß eine entsprechende Strömungsumkehr für das Kühlmittel im Bereich der Ausströmstelle aus dem Tauchrohr (17) stattfindet und das Kühlmittel dadurch im Zwischenraum zwischen dem Außenumfang des Tauchrohres (17) und dem Innenraum (21) des Vorformlings (3) nach oben strömt.

9. Verfahren nach Anspruch 4, **dadurch gekennzeichnet,** daß gerichtete Düsen in Form von Querbohrungen (22) im Tauchrohr (17) verwendet werden, um

10. bevorzugt bestimmte Bereiche des Vorformlings (3) im Innenraum (21) zu kühlen.

11. Verfahren nach Anspruch 4, **dadurch gekennzeichnet,** daß gerichtete Düsen in Form von Querbohrungen (22) im Tauchrohr (17) verwendet werden um Turbulenzen in diesem Bereich zu erzeugen.

12. Verfahren nach Anspruch 4, **dadurch gekennzeichnet,** daß das Tauchrohr (17) mit entsprechenden Querbohrungen (22) versehen ist um eine gezielte Anströmung von bestimmten Bereichen des Vorformlings zu erzielen.

13. Verfahren nach Anspruch 4, **dadurch gekennzeichnet,** daß an einem Eingang für eine Kühlluft in das Tauchrohr (17) zugeordnete Einlaßventile (16) angeordnet sind, so daß die Kühlluft gesteuert werden kann.

14. Verfahren nach Anspruch 2, **dadurch gekennzeichnet,** daß als Kühlmittel für den Vorformling (3) entsprechende verflüssigte und tiefgekühlte Gase verwendet werden.

15. Verfahren nach Anspruch 2, **dadurch gekennzeichnet,** daß als Kühlmittel für den Vorformling (3) gekühlte Luft eingeblasen wird.

16. Verfahren nach Anspruch 2, **dadurch gekennzeichnet,** daß als Kühlmittel für den Vorformling (3) getrocknete Luft eingeblasen wird.

17. Verfahren nach Anspruch 2, **dadurch gekennzeichnet,** daß als Kühlmittel für den Vorformling (3) gekühlte und getrocknete Luft eingeblasen wird.

18. Verfahren nach Anspruch 2, **dadurch gekennzeichnet,** daß als Kühlluft für den Vorformling (3) eine Kühltemperatur von bis zu -35° C verwendet wird.

19. Verfahren nach Anspruch 2, **dadurch gekennzeichnet,** daß eine aus dem Vorformling (3) entweichende und nur mit relativ geringer Wärme aufgeladene Abluft der Kühlluft in einer Abluftsammelkammer (25) gesammelt und dann über einen Auslaß (28) entnommen wird.

20. Verfahren nach Anspruch 2, **dadurch gekennzeichnet,** daß zur Kühlung für den Vorformling (3) ein flüssiges Kühlmedium verwendet wird.

21. Vorrichtung zum Nachkühlen von Vorformlingen die im Spritzgussverfahren hergestellt werden um daraus in einem nachfolgenden Hohlblasverfahren einen Hohlkörper zu blasen, wobei der Vorformling in einem Einsatz einer Nachkühlplatte zwecks Nachkühlung angeordnet ist, **dadurch gekennzeichnet,** daß die Nachkühlvorrichtung ein Tauchrohr (3) aufweist.

22. Vorrichtung nach Anspruch 20, **dadurch gekennzeichnet,** daß das Tauchrohr (17) eine untere, stirnseitige Öffnung aufweist.

23. Vorrichtung nach Anspruch 21, **dadurch gekennzeichnet,** daß das Tauchrohr (17) Querbohrungen (22) aufweist.

24. Vorrichtung nach Anspruch 20, **dadurch gekennzeichnet,** daß das Tauchrohr (17) eine untere, stirnseitige Öffnung und zusätzlich Querbohrungen (22) aufweist.

25. Vorrichtung nach Anspruch 21, **dadurch gekennzeichnet,** daß die Nachkühlvorrichtung für die Vorformlinge (3) eine Vielzahl von entsprechend angeordneten Tauchrohren (17) aufweist die jeweils einem Vorformling (3) zugeordnet sind.

26. Vorrichtung nach Anspruch 24, **dadurch gekennzeichnet,** daß jedem Tauchrohr (17) eine Kühlblasstation zugeordnet ist.

27. Vorrichtung nach Anspruch 21, **dadurch gekennzeichnet,** daß die Nachkühlvorrichtung für die Vorformlinge (3) eine Abluftsammelkammer (25) aufweist.

28. Vorrichtung nach Anspruch 26, **dadurch gekennzeichnet,** daß im Bereich des Ausgang des Vorformlings (3) dichtend eine Abluftsammelkammer (25) auf die Nachkühlplatte (1) aufgesetzt ist.

29. Vorrichtung nach Anspruch 27, **dadurch gekennzeichnet,** daß die aus dem Vorformling (3) entweichende Kühlluft in der Abluftsammelkammer (25) gesammelt und über einen Auslaß (28) entnommen wird.

30. Vorrichtung nach Anspruch 27, **dadurch gekennzeichnet,** daß an den Auslaßkanälen (28) der Abluftsammelkammer (25) Schalldämpfer (29) angebracht sind.

31. Vorrichtung nach Anspruch 27, **dadurch gekennzeichnet,** daß am Eingang der Kühlluft in das Tauchrohr (17) zugeordnete Einlaßventile (16) angeordnet sind.

32. Vorrichtung nach Anspruch 30, **dadurch gekennzeichnet,** daß das Tauchrohr (17) aus Kunststoffmaterial besteht.

33. Vorrichtung nach Anspruch 30, **dadurch gekennzeichnet,** daß das Tauchrohr (17) aus Metall besteht.
